# EUROPEAN PATENT APPLICATION

(11) **EP 2 733 824 A1**
(43) Date of publication of application: **21.05.2014**
(21) Application number: 12193023.4
(22) Date of filing: 16.11.2012
(51) Int. Cl.: H02K 3/14, H02K 3/28, H02K 7/18

(54) **Stator for an electrical machine**

(71) Applicant: Siemens Aktiengesellschaft, 80333 München (DE)
(72) Inventor: Semmer, Silvio, 7330 Brande (DK); Wu, Lijian, Sheffield, S6 3NT (GB)

(57) **Abstract**

Stator for an electrical machine, especially a generator (1), comprising at least one coil (7), wherein the coil consists of at least two separate coil units (8, 14), having the same circumferential position and different radial positions, for building a coil unit stack.

## Description

The present invention relates to a stator for an electrical machine, especially a generator, comprising at least one coil.

An increasing amount of energy is produced by the use of renewable energies. One important source of renewable energy is wind energy. Therefore the demand for bigger and better wind turbines is steadily rising. Due to this fact there is a renewed focus on the construction of efficient generators.

One of the core tasks increasing overall generator efficiency is the reduction of losses. Important losses are due to mechanical losses, the resistance of the windings, e.g. DC copper loss and DC aluminium loss, as well as magnetic loss. The best known contributions to magnetic loss are the hysteresis of the core material of the generator coils as well as eddy currents in the core. However the losses due to eddy currents in the windings themselves should not be neglected.

In modern generators power throughput is rather high and a serial wiring of coils is generally preferable. Both these facts lead to an overall minimal thickness of the conductor in the windings. Since the losses due to eddy currents scale with the diameter of the conductor, the conductor is normally laminated. Therefore each coil in the stator consists of several isolated strands that are wound in parallel.

While this approach strongly reduces losses due to eddy currents, the production of coils with several parallel strands of conductor is very difficult. The main reason of that is, that perfect alignment of wires needs to be ensured during bending.

An object of the present invention is therefore to provide a stator with a low loss due to eddy currents in the conductor, that is easier to produce.

The object is achieved according to the present invention by a stator according to the initial description wherein the coil consists of at least two separate coil units, having the same circumferential position and different radial positions, for building a coil unit stack.

The present invention is motivated by the idea to use several separate coil units, which only contain a small number of strands, instead of using one coil with many strands. In a typical stator several coils are arranged at different circumferential positions. Each of these coils normally contains several strands. According to the present invention two or more coil units are instead used at the same circumferential position, but at different radial locations. Each of these coil units can in turn consist of one or more isolated strands.

The easiest way to achieve an arrangement that behaves similar to one coil is to build a stack of two or more coil units on top of each other.

This shall be illustrated in an example: If an initial design of a stator calls for coils each containing two parallel strands in width and three in height this would mean, that the coil would contain six separate isolated strands. Producing a coil with such a large number of stands is very hard. According to the present invention it is possible to replace this coil by a coil stack made of three separate coils, each comprising two parallel strands in width. This type of coil can easily be produced by standard techniques.

The main difference in use between a stator according to the present invention and a stator built with single coils containing many strands is, that in the present invention there is a stronger difference in flux linkage to the individual strands. This flux difference is caused by different distances from the magnet if it exists, and/or by different inductances of strands due to different radial locations with respect to iron material. Care has to be taken to avoid a voltage drop between the circuits that contain the parallel strands, because otherwise current would flow from one circuit to the next. In a conventional design this is avoided by using wire transposition. Similar methods can also be used in the current invention and will be described later.

An efficient generator, that produces a clean, sine shaped current, should have multiple coils. Therefore it is advantageous when the stator comprises at least two coils, arranged at different circumferential positions, wherein there is at least one circuit connecting in series one coil unit of one of the at least two coils with one coil unit of at least one other of the at least two coils. In most cases there will be an equal angular spacing between the coils around the circumference. If these circumferencially spaced coils are used individually, each of the coils oszillates with its own phase. It is however desirable, that the number of output phases is not dependent on the number of coils used in the stator. Typically three output phases are used, there can however be more or less phases. The reduction of the number of phases can be achieved in two ways: Some of the coils can be connected in series and/or some of the coils can be connected in parallel. A parallel connection of several coils requires the presence of some kind of busbar within the electrical machine. This busbar needs to carry all the current that is input or output of this electrical machine and therefore needs to be rather thick. This can cause problems in cooling the electrical machine and also makes the machine more expensive. Therefore in most cases it is preferable to use a serial connection between the coils.

Neighbouring coils in the same circuit prefer to be connected with the same polarity to build up the flux linkage and back-EMF (electromotive force), but may be wound in the same or opposite direction. If closely spaced, neighbouring coils are wound in the same direction, (i.e. both are left handed or right handed), and the overall behaviour is very similar to that of a single, bigger coil. The use of several coils can be advantageous, because it might be easier to follow the contour of the circumference of the stator or because the stator is easier to produce that way. Making neightbouring coils of the same circuit wound in the opposite direction can be used to build up the flux linkage and back-EMF, if they see different polarity (south and north poles) of the magnetic fields. Connecting neighbouring coils of the same circuit in opposite polarities may also be used to increase the output frequency of a generator or to reduce the rotation speed of a motor. Obviously a mix of both types of connection can also be used.

It is advantageous when the stator comprises at least one phase group comprising at least two circuits, wherein at least two circuits are connected in parallel. The connection of all circuits in one point avoids a bulky bus-bar. The reason that several strands are used within the coils is, that eddy currents can be induced in strong alternating fields. As soon as the area of strong alternating fields is left, it is advantageous to combine currents from the individual coil units. The combined output of several coils makes up the output of one phase. For many generators and motors it is usual to use two or especially three phases. Therefore a stator can comprise at least two, preferably three, phase groups.

As mentioned earlier, different distances of the coil units from the magnet of a rotor caused different flux linkages between the magnets of the rotor and the individual coil units. Therefore, if one of the circuits comprises for example mainly coil units that are close to the magnets of the rotor and the other mainly comprises coil units that are far from the magnets of the rotor there would be a voltage drop between these two circuits. Since these circuits are connected in parallel this would cause current to flow from one of the circuits to the other circuit. In addition, the coil units at different radial positions can have different inductances, because of their different relative positions to the rotor iron and/or the stator iron, such as stator teeth and yoke. The different inductances of the coil units make their currents unequal since they are connected in parallel. This difference in the currents in the coil units is also a kind of circulating current. This current reduces efficiency in two ways: On the one hand it causes additional heating, therefore requiring more cooling and potentially thicker wiring, on the other hand the power that is used for this additional heating is lost. Therefore such currents should be avoided. One possibility to avoid this is a stator wherein the number of coils in each phase group is an integer multiple of the number of coil units in each coil, and the number of coil units in each radial position is the same for each of the at least two circuits for the phase group or each of the phase groups.

This approach uses the fact, that the voltage induced in each coil unit is proportional to the change of flux in this coil. The overall flux change is however proportional to the total flux. Since the system has a circular symmetry The flux that can pass through a single coil unit is only dependent on the radial position of this coil unit. Also the induced voltages of the separate coil units are additive. Therefore, if each of the circuits contains the same number of coil units in each radial position the sum of the voltages induced on these coils is the same for each of the circuits. Therefore the overall voltage induced in the circuit is the same and there is no current between circuits.

Another important concern when designing an electrical machine is the overall cost and weight of the machine as well as the ability to cool the machine. If very strong isolation is necessary between the individual coil units all of these qualities are compromised. Therefore it is desirable to design the stator in a way that little isolation is necessary to ensure security. To achieve this the neighbouring sides of coil units in a coil stack should have a similar potential on their surfaces. It is therefore advantageous when neighbouring coil units in the same coil are wound in opposite radial directions, one being wound from top to bottom while the other being from bottom to top, although the coil units at the same circumferential position prefers the same winding direction, either left handed or right handed. In the following discussion, we always assume the reference direction of each coil unit is going into the terminal at the left side and coming out from the right side shown in the figure. Based on this reference direction, one can see from the figure if it is wound from top to bottom or from bottom to top If one considers for example one top coil and one bottom coil and both have the same potential on their neighbouring sides, and an alternating magnetic field is sweeped through this coil the voltage induced on the top side of the coil stack and the bottom side of the coil stack will have the same polarity.

It is also possible, that the stator comprises a switching device and at least two phase groups, each containing at least two coils, wherein the switching device is designed to switch the phase group and/or polarity of at least one of the coils. It is often desirable in an electrical machine to vary the rotation speed of the electrical machine at the same input frequency or to vary the frequency of the output current at the same rotation speed. By being able to switch individual coils between polarities and/or phase groups it becomes possible to change the number of poles of the generator or motor. In a generator increasing the number of poles will increase the frequency of the output current. In a motor increasing the number of poles will decrease the rotation speed at the same input frequency.

According to the present invention the number of parallel strands in the radial direction of each coil unit is reduced compared to the number of parallel strands in radial direction when using a standard coil. It is however still advantageous, if there are at least two mutually isolated conducting strands in each coil unit. It is especially advantageous if these are arranged side by side therefore building two parallel strands in the direction of the width of the coil unit.

In this case it is also advantageous when the at least one circuit comprises a number of sub-circuits equal to the number of strands in each coil unit, whereby the sub-circuits are connected in parallel, each containing exactly one strand of each coil unit in the circuit. In other words each strand in a coil should be a member of a sub-circuit and all these sub-circuits within the same phase group should be connected in parallel.

The previous discussion about different flux linkages for different coil units also holds true for individual strands of a coil unit. Additionally to the previously discussed dependency on the radial position of the strand using several strands in parallel in the direction of the width of the coil unit adds the additional parameter of the area of the winding. Therefore it is advantageous when the number of coils is an integer multiple of the number of strands in each of the coil units and the strands are connected such, that the total flux linkage is the same for each circuit. Once again the total voltage of the circuit is the sum of the individual voltages induced in each of the strands in each of the coil units connected in series. To achieve the same overall voltage each circuit should contain the same number of strands having a given winding radius and radial position in the coil unit with the coil unit having a given radial position. If this condition holds through there should be no voltage drop between the individual circuits or sub-circuits and there is no additional flow of current.

It is possible that each coil unit comprises at least two strands of conductor, the strands being arranged in parallel in the same radial position.

In addition the present invention relates to a generator comprising a rotor and a stator according to the previous description.

Furthermore the invention also relates to a wind turbine comprising a generator as described above.

The above and other aspects, features and other advantages of the present invention will be more clearly understood from the following detailed description taken in conjunction with the accompanying drawings, in which:
- fig. 1: is a schematic drawing of a generator,
- fig. 2: is a diagram of the coils in phase group A of the stator of fig. 1,
- fig. 3: is a cutaway view of one of the coils of fig. 2,
- fig. 4: shows an alternate arrangement of the coils for the phase group A of fig. 1 according to the present invention,
- fig. 5: shows the winding of one of the coils of fig. 4,
- fig. 6: shows an alternate arrangement of the coils for phase group A of fig. 1 according to the present invention,
- fig. 7: is an alternate arrangement of the coils of phase group A of fig. 1 according to the present invention,
- fig. 8: shows an alternate arrangement of the coils for the phase group A of fig. 1 according to the present invention,
- fig. 9: shows an arrangement of coils for coils containing three coil units,
- fig. 10: shows an alternate arrangement of coils for coils containing three coil units,
- fig. 11: shows a coil arrangement in a stator according to the state of the art, and
- fig. 12: shows a coil arrangement for a stator according to the present invention with equivalent functionality to the stator of fig. 11.

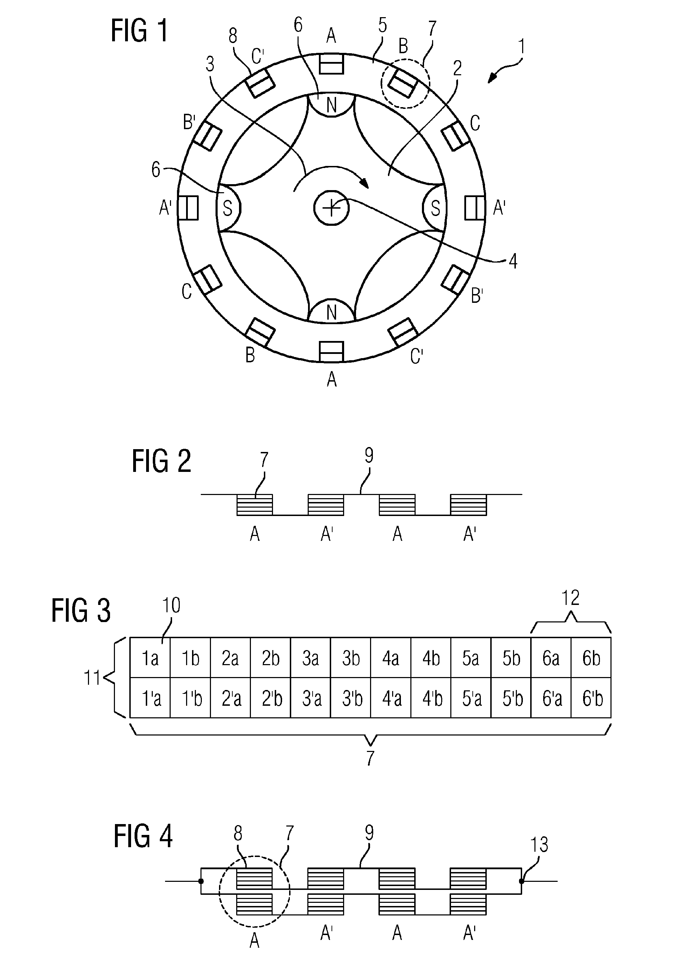

Fig. 1 shows a schematic drawing of a generator according to the present invention. The generator 1 comprises a rotor 2 that rotates in the direction of the arrow 3 around the axis 4. The rotor 2 rotates inside the stator 5. There are four magnets 6 arranged on the rotor 2. While the rotor 2 is rotating these magnets pass several coils 7. There are twelve coils 7 in the generator, divided in three phase groups A, B, C. Each of the coils 7 consists of two coil units 8 that are stacked on top of each other building a coil unit stack. The sweeping of the magnetic field through the coils induces a voltage in the coils. All the coils in phase group A, B and C are wired in a series within the phase group. The coils marked with a letter and a dash, A', B' and C' are connected with an opposite polarity than the coils marked with a letter A, B, C.

We will focus the discussion on the coils of phase group A, but the same discussion also applies to phase groups B and C. Four different arrangements for the coils are described, which are shown in fig. 2, fig. 4, fig. 6 and fig. 7. For comparison first an arrangement of the coils according to the state of the art is described in fig. 2 and fig. 3. In the further description improvements will be added step by step.

Fig. 2 shows a coil arrangement for phase group A of the stator of fig. 1 according to the state of the art. The four coils 7 are connected in series. The coils for A' slots are wired with an opposite polarity to the coils of the A slots. The coils 7 are connected by the connections 9.

Fig. 3 shows a cutaway of one coil of fig. 2. The coil 7 has six windings numbered 1 to 6 in fig. 3 each of the windings consists of four strands 10. The four strands 10 for the first winding are labelled 1a, 1b, 1'a, 1'b. For the further windings equivalent names are picked. As seen in fig. 3 there are two strands 11 in parallel in the direction of the width of the coil and two strands 12 in parallel in the direction of the height of the coil. The coil therefore has four parallel strands, which have to be kept parallel during the bending process of production. This can be very challenging. If the number of strands is increased the challenge is also increased. Therefore an alternative approach should be used.

Fig. 4 shows an alternative arrangement for the coils of phase group A from fig. 1. Here each coil 7 is made up of two stacked coil units 8 stacked on top of each other in radial direction. Each of these coil units 8 is connected in series with one coil unit 8 of each of the other coils. Therefore two circuits of connected coil units 8 are created. The further connection 13 that connects these circuits in parallel is arranged outside of the area of strong alternating field. If a coil arrangement as shown in fig. 4 is used there is a strong difference in coupling to the magnetic flux between the upper circuit and lower circuit. In this scheme the magnets would be passing above the drawing. Therefore there would be a stronger flux through the upper coil units and therefore also a stronger change of flux. Therefore the overall induced voltage of the upper circuit would be higher, producing a current flowing between the parallel circuits. In addition, the upper circuit and lower circuit have different inductances due to their different radial locations with respect to the rotor or stator iron material. The different inductances of two parallel circuits can result in a difference in their currents. In other words, the circulating current can be produced by the different inductances of the upper and lower circuits. This is undesirable and amends for this behaviour will be introduced later in the text.

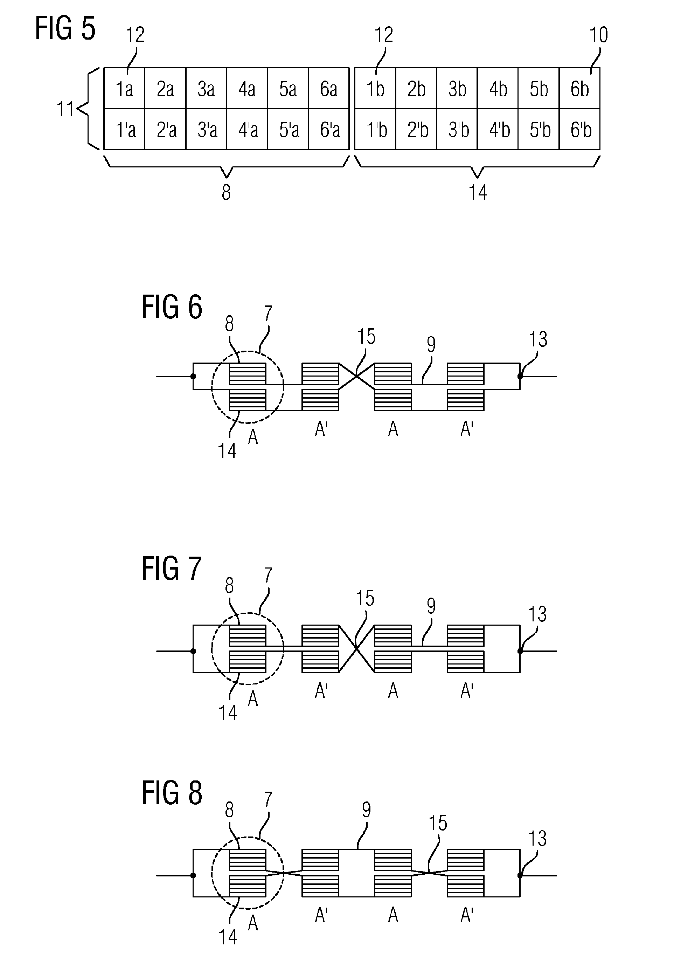

Before improving the arrangement of coils further the winding of the individual coils in fig. 4 should be discussed. This winding is shown in fig. 5. The most obvious difference to fig. 2 is, that there are now two coil units 8 and 14. Comparing with fig. 4, coil unit 8 is the coil unit on top of the coil stack and coil unit 14 is the coil unit on the bottom of the coil stack. Each of the coil units 8, 14 is made up of several strands 10 and each strand has six windings which are numbered in accordance with the numbering in fig. 3. There are still two parallel strands 11 in the direction of the width of the coil unit. The strands 12 that were arranged in parallel in one coil in fig. 3 are now distributed on the two separate coil units 8 and 14. With this separation of parallel strands the number of strands in each of the individual coil units is reduced. Therefore the coil 7 is made up of two separate coil units 8, 14.

The previously discussed issue of the voltage drop between the individual circuits in fig. 4 can be solved with an arrangement of the coils as shown in fig. 6. The overall arrangement is similar, showing coils 7 made up of two individual coil units 8, 14. The difference between this coil arrangement and the coil arrangement in fig. 4 is the connection 9 between the coils. Here each circuit connects two coil units from the upper part of the coil and two units from the lower part of the coils. The switch from the upper part to the coils to the lower part of the coils happens at the transposition point 15. Again two circuits are created and are connected in parallel at a connection point 13 outside of the area of strong alternating fields. Since each circuit contains the same number of coils at each radial position there is no voltage induced between the circuits and there is no additional current.

Fig. 7 shows an arrangement of coils 4 of the phase group A of fig. 1 where the total amount of isolation can be reduced by trying to minimize the potential difference between adjacent sides of coil units 8, 14. The main difference here is how the individual coils 7 are made up. While one of the coil units is the same like in the previous examples, the second coil unit 14 in this example is wound in the other radial direction. In other words, the coil unit 14 is wound from bottom to top, while the coil unit 8 is wound from top to bottom. This is equivalent to flipping the direction of the coil. Therefore if previously a voltage was induced between the bottom of the coil and the top of the coil with e.g. plus sign it is now induced from the top of the coil to the bottom of the coil with a plus sign. With this arrangement the only differences in potential are caused by the slighted difference in flux linkage at some points in the circuit. The coil arrangement as shown in fig. 7 has several advantages. The coils made up of several coil units are easier to manufacture than coils made up of a multitude of strands. At the same time internal current flow due to different flux linkage is minimized. The specific wiring also allows to use two separate coils with a minimum of isolation.

Fig. 8 shows an alternate arrangement of the coils for the phase group A of fig. 1. This arrangement is a slight variation of the arrangement shown in fig. 7. Like in fig. 7 the coil 7 consists of two coil units 8 and 14. The row of coil units further from the centre of the stator containing coil units 14 is wound in the opposite radial direction than the row of coil units closer to the centre containing coil units 8. The coils are connected in series by connections 9. In this case there are two transposition points 15. The two parallel circuits are connected at point 13 which is outside the area of strong magnetic flux variation. Depending on the design of the stator having several transposition points can improve the overall symmetry and therefore the quality of the produced current.

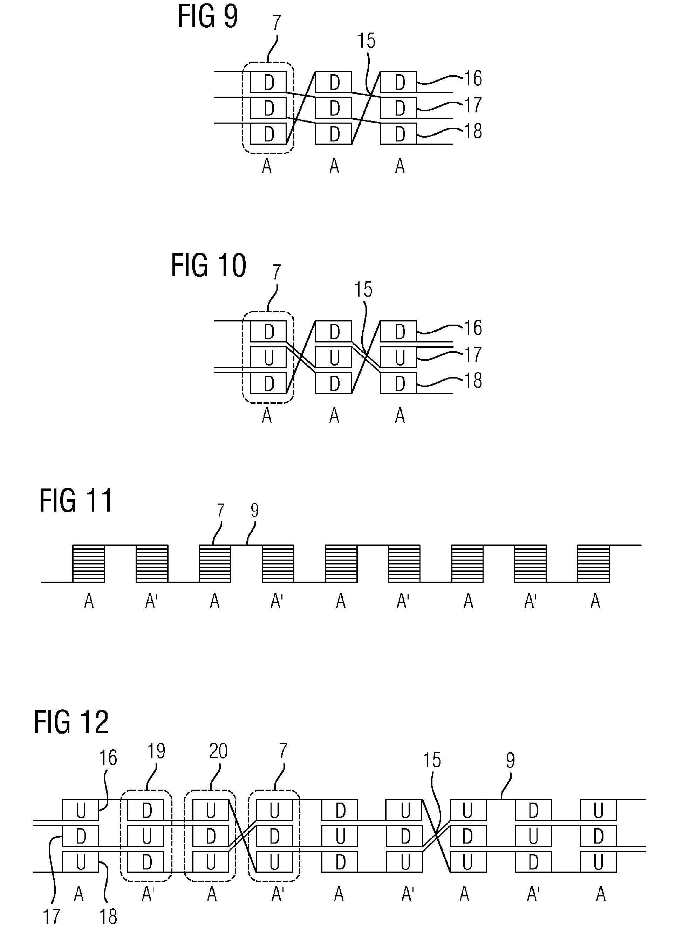

Fig. 9 shows an arrangement of coils for coils containing three coil units. Here the coil 7 consists of three coil units 16, 17, 18. In this case all the coils are wound in the same direction. Therefore all coils are labelled A and there are no A' coils. This arrangement of coils can be used when the coils are spaced far apart compared to the size of the magnets. In this case each coil will first show a positive voltage when the magnetic flux through the coil is increased and a negative voltage when the flux through the current is decreased. In this case all coil windings are in the same direction, either left handed or right handed, to build up the flux linkage and back-EMF. However, the coil units at each circumferential position can be wound in the same or different radial direction. Fig. 9 shows an example that all coils units are wound in the same direction from top to bottom, and labelled with the letter D. There are now three coil units 16, 17, 18 in each coil 7, therefore two transposition points 15 are needed. Compared to the coil arrangements shown in fig. 7 and fig. 8 this coil arrangement has a significant potential drop between neighbouring sides of neighbouring coil units.

To avoid this potential drop and therefore decrease the amount of necessary isolation material opposite radial winding directions for neighbouring coil units in one coil can be used. Fig. 10 shows an alternate arrangement of coils for coils containing three coil units, wherein neighbouring coil units in the same coil are wound different radial directions. Here, like in fig. 9 there are three coil units 16, 17, 18 in each coil 7 and two transposition points 15 are necessary. The major difference to the coil arrangement shown in fig. 9 is that the coil units 17 in the middle row of coil units are wound from bottom to top and labelled with the letter U while the coil units 16 in the row closest to the centre of the stator and the coil units 18 in the row further away from the centre of the stator are both wound from top to bottom. Since the neighbouring coil units can be wound in the opposite radial direction, the shown arrangement is possible, in which the potential difference between neighbouring sides of two neighbouring coil units in a coil 7 is minimal.

As a last example the application of several coil units in one coil should be shown in a slightly more complex stator. The original design of the stator called for nine coils for one phase and the coils being connected in three parallel circuit branches. Each of the coils in this stator has twenty-four turns. The first step in optimizing this stator is to get rid of the busbars, therefore changing the coil arrangement from three parallel circuits to one circuit connecting all coils in series. Since the overall number of turns in each circuit should be kept the same the number of turns per coil is reduced from twenty-four to eight. The resulting coil arrangement is shown in fig. 11. Here nine coils 7 are connected in series by connections 9. Neighbouring coils are connected in opposite directions, therefore increasing the frequency of the output voltage. Changing from parallel circuits to a serial circuit comes with one major draw back of increasing the diameter of the conductor. Therefore losses due to eddy currents would be increased. To solve this problem the conductor is laminated and six parallel strands are used in each coil. Two strands are arranged in parallel in the direction of the width of the coil, and three strands are arranged in parallel along the hight of the coil. The different flux coupling of the resulting six circuits can be compensated by a standard transposition techniques. However a coil like this, containing six parallel strands is very hard to manufacture.

It is however possible to replace each of the coils 7 in fig. 11 with a coil 7 containing three coil units 16, 17, 18. The resulting arrangement is shown in fig. 12. To provide the same functionality as the stator of fig. 11 neighbouring coils should be antiparallel. This can be seen for example when comparing the coils 19 and 20. In each of the rows of the coil unit voltage with an opposite sign is induced with the same change of magnetic flux. An arrangement like this is especially useful, when the coil spacing is comparable to the size of the magnet. In this case, while the magnet is moving between the two coils 7 and 19 the flux in coil 7 will decrease and the flux in coil 19 will increase. Therefore the sign of the voltage induced in both coils will be the same and the decreasing part and increasing part of the magnetic flux are used to generate voltage.

This arrangement of coils slightly increases complexity of the coil arrangement when trying to keep the potential drop between neighbouring sides of neighbouring coil units 16, 17, 18 in coils 7, 19, 20 minimal. Of any one coil, the coil units closest and furthest from the centre of the stator are wounded in the same radial direction, while the middle coil is wound in an opposite radial direction. As described previously the potential drop between neighbouring sides of neighbouring coil units 16, 17, 18 can be minimized in this manner. To keep this minimisation true throughout the full stator, the radial winding direction of the neighbouring coil units has to be opposite for each coil. This can for example be seen in coil 20, where the coil units closest and furthest from the centre of the stator are wound from bottom to top and the coil in the middle is wound from top to bottom. With these considerations taken into account, the functionality of the stator shown in fig. 11 can be fully reproduced. The main advantage of the stator shown in fig. 12 compared to the one in fig. 11 is that the individual coils are a lot easier to produce. Instead of keeping six strands in parallel during the bending of the coil only two strands, which are arranged in parallel in the direction of the width of the coil have to be kept in parallel. Therefore the stator shown in fig. 12 provides a major improvement on a stator shown in fig. 11.

Although the present invention has been described in detail with reference to the preferred embodiment, the present invention is not limited by the disclosed examples from which the skilled person is able to derive other variations without departing from the scope of the invention.

## Claims

1. Stator for an electrical machine, especially a generator (1), comprising at least one coil (7), wherein the coil consists of or comprises at least two separate coil units (8, 14), having the same circumferential position and different radial positions, for building a coil unit stack.

2. Stator according to claim 1, comprising at least two coils (7), arranged at different circumferential positions, wherein there is at least one circuit connecting in series one coil unit (8, 14) of one of the at least two coils (7) with one coil unit (8, 14) of at least one other of the at least two coils (7).

3. Stator according to claim 2, comprising at least one phase group comprising at least two circuits, wherein the at least two circuits are connected in parallel.

4. Stator according to claim 3, comprising at least two, preferably three, phase groups.

5. Stator according to claim 3 or 4, wherein the number of coils (7) in each phase group is an integer multiple of the number of coil units (8, 14) in each coil (7), and the number of coil units (8, 14) in each radial position is the same for each of the at least two circuits for the phase group or each of the phase groups.

6. Stator according to one of the preceding claims, wherein neighbouring coil units (8, 14) in the same coil (7) are wound in opposite radial directions.

7. Stator according to one of the preceding claims, comprising a switching device and at least two phase groups, each containing at least two coils, wherein the switching device is designed to switch the phase group and/or polarity of at least one of the coils (7).

8. Stator according one of the preceding claims, wherein there are at least two mutually isolated conducting strands (10) in each coil unit.

9. Stator according to claim 8 and 2, wherein the at least one circuit comprises a number of sub-circuits equal to the number of strands (10) in each coil unit (8, 14), whereby the sub-circuits are connected in parallel, each containing exactly one strand (10) of each coil unit (8, 14) in the circuit.

10. Stator according to claim 9, wherein the number of coils (7) is an integer multiple of the number of strands (10) in each of the coil units (8, 14) and the strands (10) are connected such, that the total flux linkage is the same for each circuit.

11. Stator according to one of the claims 8 to 10, wherein each coil unit (8, 14) comprises at least two strands (10) of conductor, the strands being arranged in parallel in the same radial position.

12. Generator comprising a rotor (2) and a stator (5) according to one of the preceding claims.

13. Wind turbine comprising a generator (1) according to claim 12.
